# FASCICULE DE BREVET EUROPEEN

(11) **EP 2 802 702 B1**
(45) Date de publication et mention de la délivrance du brevet: **26.12.2018**
(21) Numéro de dépôt: 13705827.7
(22) Date de dépôt: 07.01.2013
(51) Int. Cl.: D03D 25/00, B29C 70/24

(54) **PIECE DE RENFORT A SECTION EN PI EN MATERIAU COMPOSITE, NOTAMMENT PLATE-FORME DE SOUFFLANTE DE TURBOMACHINE, ET SON PROCEDE DE FABRICATION**
PI-ABSCHNITT-VERSTÄRKUNGSTEIL AUS VERBUNDMATERIAL, INSBESONDERE FÜR EINE TURBOMASCHINEN-LÜFTERPLATTFORM, SOWIE HERSTELLUNGSVERFAHREN DAFÜR
PI-SECTION REINFORCING PIECE MADE OF COMPOSITE MATERIAL, NOTABLY TURBOMACHINE FAN PLATFORM, AND METHOD OF MANUFACTURING SAME

(30) Priorité: 09.01.2012 US 201261584422 P
(43) Date de publication de la demande: 19.11.2014
(73) Titulaire: Safran Aircraft Engines, 75015 Paris (FR)
(72) Inventeur: MARCHAL, Yann, Portsmouth, New Hampshire 03801 (US); MAHIEU, Jean-Noël, F-94250 Gentilly (FR)
(74) Mandataire: Boura, Olivier
(86) Numéro de dépôt international: PCT/FR2013/050027
(87) Numéro de publication internationale: WO 2013/104853

(56) Documents cités:
- US-A1- 2010 167 007
- US-B2- 6 874 543

## Description

### Arrière-plan de l'invention

La présente invention se rapporte au domaine général des pièces de renfort à section en forme de π en matériau composite comprenant un renfort fibreux densifié par une matrice.

Un domaine d'application est celui des plates-formes de soufflante pour turbomachines.

Les plates-formes d'une soufflante de turbomachine, notamment de turboréacteur, sont disposées entre les aubes de la soufflante dans le prolongement du cône d'entrée de celle-ci. Elles permettent notamment de délimiter, du côté intérieur, la veine annulaire d'entrée d'air dans la soufflante, cette veine étant délimitée du côté extérieur par un carter.

L'attache d'une plate-forme de soufflante sur la structure du moteur peut être réalisée au niveau de marches formées à l'avant et à l'arrière de la plate-forme. Dans ce cas, ces marches viennent se loger sous des rebords de la structure du moteur afin de retenir la plate-forme sous l'effet de l'effort centrifuge dû à la vitesse de rotation de la soufflante. L'effort centrifuge dû à la rotation de la soufflante a par ailleurs tendance à bomber la plate-forme en son centre. Aussi, afin d'assurer un comportement correct des plates-formes et d'éviter de déplacements trop importants de celles-ci, il est nécessaire de raidir ces pièces en leur ajoutant des jambes ou pattes s'étendant sous leur base.

Par ailleurs, le recours aux matériaux composites thermostructuraux et notamment de matériaux composites à matrice organique (CMO) est devenu commun pour la réalisation des aubes de soufflante. En effet, par rapport à des alliages métalliques, de tels matériaux présentent une tenue améliorée aux températures et ont une moindre masse.

US 6,874,543 décrit une pièce de renfort à section en pi et un procédé de fabrication d'une telle pièce selon le préambule des revendications indépendantes 1 et 7.

### Objet et résumé de l'invention

Il est donc souhaitable de pouvoir également disposer de plates-formes de soufflante, et plus généralement de pièces de renfort de turbomachine, en matériau composite notamment mais non exclusivement en matériau composite thermostructural tel qu'en CMO.

A cet effet, selon l'invention, il est proposé un procédé de fabrication d'une pièce de renfort à section en π en matériau composite comprenant une première partie formant base qui présente une marche à au moins l'une de ses extrémités longitudinales, et une seconde partie formant raidisseur ayant deux jambes qui s'étendent depuis une face de la base et sur au moins une portion de la longueur de celle-ci, le procédé comprenant :
- la réalisation par tissage tridimensionnel d'un premier ensemble de plusieurs couches de fils liées entre elles pour former une première partie d'ébauche fibreuse destinée à former une préforme de base,
- la réalisation par tissage tridimensionnel d'un second ensemble de plusieurs couches de fils liées entre elles pour former une seconde partie d'ébauche fibreuse destinée à former une préforme de raidisseur, des fils du second ensemble de couches de fils étant liés par tissage aux fils du premier ensemble de couches de fils sur une bande centrale de déliaison s'étendant longitudinalement entre les deux extrémités longitudinales de la première partie d'ébauche fibreuse et s'évasant vers les bords latéraux de celle-ci au niveau d'une zone correspondant à la marche de la base,
- la mise en forme des deux parties d'ébauche fibreuse pour obtenir une préforme fibreuse en une seule pièce ayant une partie formant préforme de base et une partie formant préforme de raidisseur, et
- le dépôt d'une résine dans la préforme fibreuse pour obtenir une pièce de renfort en matériau composite ayant un renfort fibreux constitué par la préforme et densifié par la matrice.

Le procédé selon l'invention prévoit de lier les deux ensembles de couches de fils le long d'une bande centrale de déliaison s'évasant au niveau d'une zone de la première partie d'ébauche correspondant à la marche de la base. La forme particulière de la déliaison qui en résulte entre les deux ensembles de couches de fils permet ainsi, lors de la mise en forme, de former les ébauches de jambes du raidisseur de la pièce de renfort malgré la présence de la marche. En particulier, au niveau de cette marche, les ébauches de jambes peuvent être formées sans créer dans leur longueur de plis qui pourraient être à l'origine de phénomènes de flambage.

Par rapport à un tissage tridimensionnel d'une ébauche fibreuse de la pièce de renfort en une seule et même pièce, le procédé selon l'invention présente l'avantage d'être beaucoup plus simple à mettre en oeuvre. En particulier, la mise en forme des parties d'ébauche fibreuse ne nécessitent pas de découpe de la préforme, ni de positionnements multiples et délicats de replis les uns par rapport aux autre.

De plus, le procédé selon l'invention permet d'obtenir une préforme fibreuse particulièrement robuste puisque les deux parties d'ébauche fibreuse qui la constituent sont liées entre elles par tissage. Appliqué à la fabrication d'une plate-forme de soufflante de turbomachine, le procédé selon l'invention contribue ainsi à conférer les propriétés mécaniques requises pour une telle plate-forme, notamment au niveau de la liaison entre la partie formant base et la partie formant raidisseur.

Selon une particularité avantageuse du procédé, la liaison par tissage des fils du second ensemble de couches de fils aux fils du premier ensemble de couches de fils est obtenue par entrecroisement respectifs desdits fils sur la bande de déliaison. Une telle liaison peut ainsi être obtenue sans ajout de fils supplémentaires, ce qui évite de raidir la préforme.

Lorsque le support de la pièce de renfort présente une marche à chacune de ses extrémités longitudinales, la bande de déliaison entre des fils du premier et du second ensemble de couches de fils s'évase avantageusement vers les bords latéraux de la première partie d'ébauche fibreuse au niveau de chaque zone correspondant aux marches de la base. Dans ce cas, de préférence, en amont de la zone correspondant à la marche amont de la base et en aval de la zone correspondant à la marche aval de la base, la bande de déliaison entre des fils du premier et du second ensemble de couches de fils s'étend transversalement sur toute la largeur de ladite première partie d'ébauche fibreuse. L'aval et l'amont s'entendent ici par rapport à la direction de tissage.

De préférence, la mise en forme comprend la formation d'au moins une marche par pliage des deux parties d'ébauche fibreuse le long d'une même ligne de pliage sensiblement transversale. De même, la mise en forme de la seconde partie d'ébauche fibreuse comprend avantageusement le pliage des parties déliées de la seconde partie d'ébauche fibreuse selon une direction sensiblement perpendiculaire à la première partie d'ébauche fibreuse de sorte à former deux préformes de jambes.

L'invention vise également une pièce de renfort à section en π en matériau composite comprenant une première partie formant base qui présente une marche à au moins l'une de ses extrémités longitudinales, et une seconde partie formant raidisseur ayant deux jambes qui s'étendent depuis une face de la base et sur au moins une portion de la longueur de celle-ci, la première partie et la seconde partie étant liées entre elles par tissage le long d'une bande centrale de déliaison qui s'étend longitudinalement entre les deux extrémités longitudinales de la première partie et qui s'évase vers les bords latéraux de celle-ci au niveau d'une zone correspondant à la marche de la base.

La pièce de renfort peut être en matériau composite à matrice organique.

Selon une particularité de la pièce de renfort, la première partie et la seconde partie sont liées entre elles par entrecroisement respectifs des fils qui les constituent sur la bande de déliaison.

Selon une autre particularité de la pièce de renfort, en aval de la zone de la première partie correspondant à la marche de la base, la bande de déliaison entre la première partie et la seconde partie s'étend transversalement sur toute la largeur de ladite première partie.

La première partie de la pièce de renfort peut comprendre une marche à chacune de ses extrémités longitudinales.

La pièce de renfort peut constituer une plate-forme de soufflante de turbomachine.

L'invention vise encore une turbomachine équipée d'au moins une plate-forme de soufflante telle que définie précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique d'une plate-forme de soufflante de turbomachine obtenue par le procédé selon l'invention ;
- la figure 2 illustre de façon très schématique la disposition des deux ensembles de couches de fils dans une ébauche fibreuse tissée tridimensionnelle destinée à la réalisation d'une préforme fibreuse pour une plate-forme telle que celle illustrée par la figure 1 ;
- les figures 3 et 4 illustrent des étapes successives de réalisation d'une préforme fibreuse, pour une plate-forme telle que celle de la figure 1, à partir de l'ébauche fibreuse de la figure 2 ; et
- les figures 5, 6 et 7 sont des plans de trame de l'ébauche fibreuse de la figure 2, respectivement selon les plans V-V, VI-VI et VII-VII.

### Description détaillée de l'invention

L'invention est applicable à toute pièce de renfort à section en π qui comprend une base ayant une marche à au moins l'une de ses extrémités longitudinales et un raidisseur ayant deux jambes qui s'étendent depuis une face de la base.

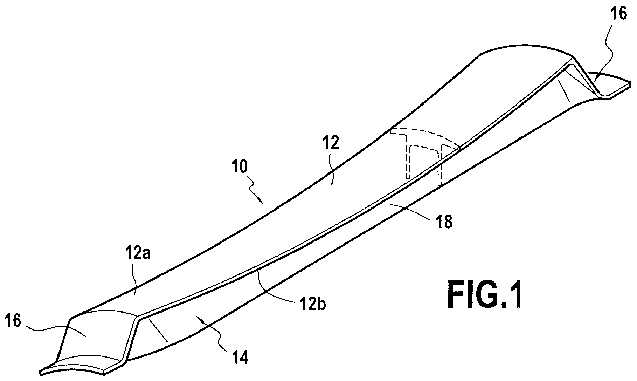

L'invention trouve notamment une application privilégiée dans la fabrication des plates-formes de soufflante de turbomachine telles que celle illustrée par la figure 1.

La plate-forme 10 de la figure 1 comprend une première partie formant une base 12 et une seconde partie formant raidisseur 14. La base 12 est de forme sensiblement allongée avec une face supérieure 12a et une face inférieure 12b. Cette base comprend à chacune de ses extrémités longitudinales une marche 16, c'est-à-dire que ces extrémités sont pliées vers l'intérieur le long de lignes sensiblement transversale. Ces marches 16 permettent d'assurer une fixation de la plate-forme sur la structure de la turbomachine.

Le raidisseur 14 de la plate-forme comprend deux jambes 18 (ou pattes) qui s'étendent à partir de la face interne 12b de la base sur toute sa longueur. Ces jambes permettent de rigidifier la plate-forme de sorte à éviter tout déplacement de celle-ci sous l'effort centrifuge dû à la vitesse de rotation de la soufflante.

La plate-forme 10 ainsi constituée présente une section en forme de π comme représenté en tirets sur la figure 1.

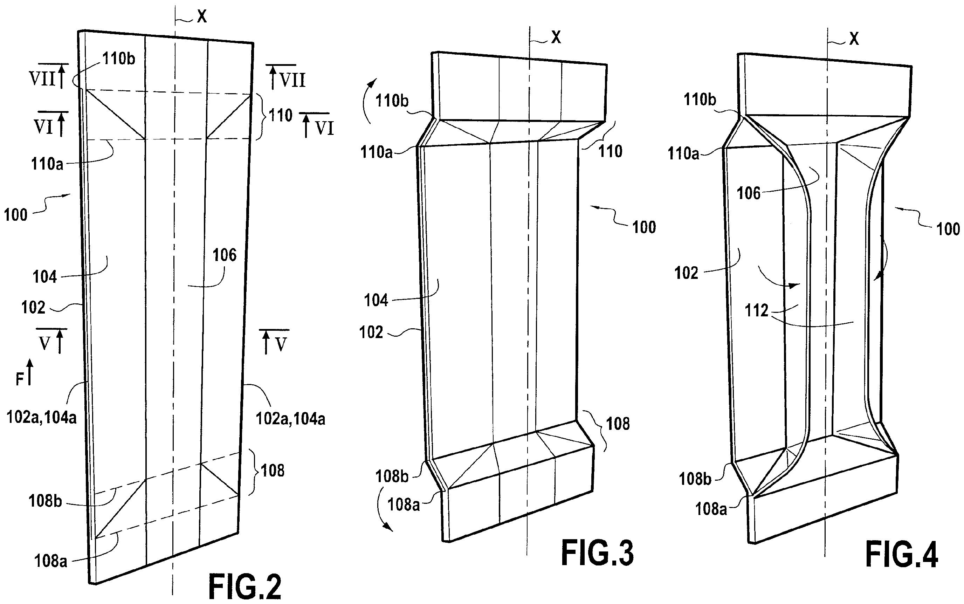

La figure 2 représente très schématiquement une ébauche fibreuse 100 à partir de laquelle une préforme fibreuse de plate-forme peut être mise en forme, avant injection de résine ou densification par une matrice et usinage éventuel, afin d'obtenir une plate-forme de soufflante en matériau composite telle que celle illustrée par la figure 1.

L'ébauche 100 comprend une première partie d'ébauche 102 et une seconde partie d'ébauche 104 obtenues par tissage tridimensionnel ou tissage multicouches, seules les enveloppes de ces deux parties étant représentées sur la figure 2. La première partie 102 est destinée, après mise en forme, à constituer une partie de préforme fibreuse de plate-forme correspondant à une préforme de base. La seconde partie 104 est quant à elle destinée, après mise en forme, à constituer une autre partie de préforme fibreuse de plate-forme correspondant à une préforme de raidisseur.

Les deux parties d'ébauches 102, 104 sont sous forme de bandes s'étendant de façon générale dans une direction X correspondant à la direction longitudinale de la plate-forme à réaliser. Les deux parties d'ébauches fibreuses peuvent être de même largeur et de même longueur choisies en fonction des dimensions de la plate-forme à fabriquer.

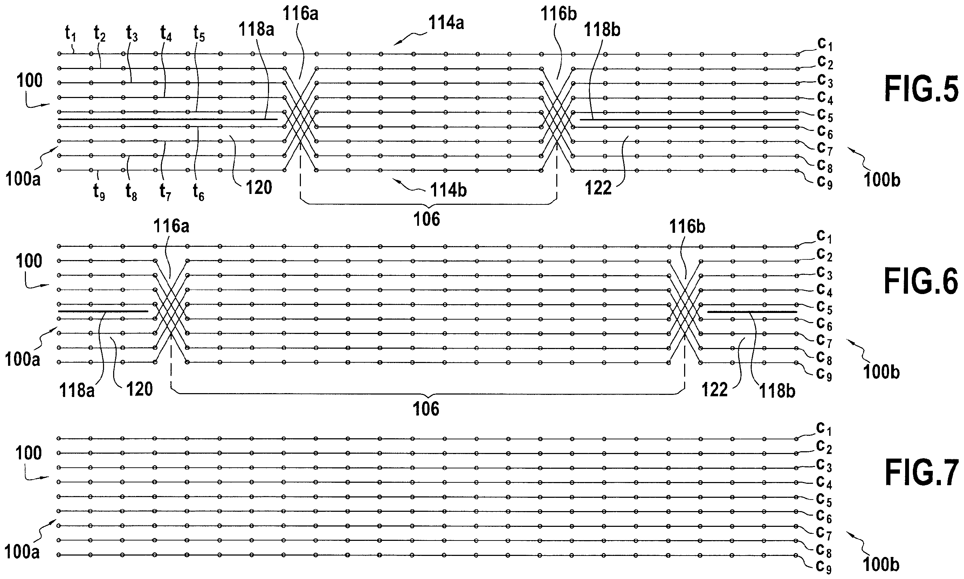

Les deux parties d'ébauches 102, 104 sont tissées simultanément par tissage tridimensionnel sans liaison entre elles sauf le long d'une bande centrale dite de déliaison 106 s'étendant longitudinalement entre leurs deux extrémités longitudinales. Un exemple de réalisation de la liaison entre les parties d'ébauches le long de la bande centrale sera décrit ultérieurement en liaison avec les figures 6 à 8.

Au niveau de chacune de ses extrémités longitudinales, la bande centrale de déliaison 106 entre les deux parties d'ébauche 102, 104 s'évase vers les bords latéraux opposés 102a, 104a respectifs des deux parties d'ébauche au niveau d'une première et d'une seconde zones 108, 110 qui correspondent à l'emplacement des marches de la base de la plate-forme.

Ainsi, dans la direction F d'avancement du tissage des deux parties d'ébauche 102, 104 représentée sur la figure, la bande de déliaison 106 s'étend à une extrémité amont sur toute la largeur des parties d'ébauche. A partir d'une première ligne transversale de pliage 108a correspondant au début de la première zone 108 (appelée aussi zone amont), la largeur de la bande de déliaison se rétrécit jusqu'à la seconde ligne transversale de pliage 108b correspondant à la fin de la première zone 108. A l'extrémité opposée, la bande de déliaison entre les parties d'ébauche s'élargit à nouveau (dans le sens transversal) à partir d'une première ligne transversale de pliage 110a correspondant au début de la seconde zone 110 (appelée également zone aval) jusqu'à une seconde ligne transversale de pliage 110b correspondant à la fin de la seconde zone 110 à partir de laquelle la bande de déliaison s'étend sur toute la largeur des parties d'ébauche.

Comme représenté sur la figure 3, les deux parties d'ébauche fibreuse 102, 104 sont alors pliées vers l'intérieur au niveau des lignes de pliage 108b et 110a précédemment définies (et communes aux deux parties d'ébauche). Un pliage vers l'extérieur des parties d'ébauche est ensuite réalisé au niveau des autres lignes de pliage 108a et 110b pour conférer aux deux extrémités de l'ébauche fibreuse des rebords pour l'attache de la plate-forme sur la structure du moteur. Les marches seront ainsi définies par les portions des parties d'ébauche délimitées entre les lignes de pliage 108a et 108b pour la marche amont et les lignes de pliage 110a et 110b pour la marche aval.

Du fait de la déliaison entre les parties d'ébauche fibreuses en dehors de la bande centrale de déliaison 106, les parties déliées 112 de la seconde partie d'ébauche 104 peuvent alors être repliées (ou rabattues) vers l'intérieur de sorte à former des préformes de jambes (figure 4).

La forme particulière de la déliaison entre les parties d'ébauche au niveau des marches permet d'obtenir des préformes de jambes 112 qui sont dépourvues de plis sur toute leur longueur.

Une préforme fibreuse de la plate-forme à fabriquer est ensuite obtenue par moulage avec une déformation de la première partie d'ébauche fibreuse pour reproduire des formes épousant les profils des aubes entre lesquelles la plate-forme sera montée. La forme finale pourra être donnée par déformation de la préforme avant moulage ou par usinage de la pièce après moulage. On obtient ainsi une préforme avec une partie de préforme de base avec ses marches et une partie de préforme de raidisseur avec ses deux jambes (ou pattes).

Les fibres de la préforme fibreuse sont en un matériau choisi en fonction de l'application envisagée, par exemple en verre, en carbone ou en céramique.

Le dépôt de la matrice dans la préforme fibreuse pour obtenir une plate-forme en matériau composite est réalisée en maintenant la préforme dans le moule au moins jusqu'à rigidification (ou consolidation) de la préforme. La matrice est de nature choisie en fonction de l'application envisagée, par exemple une matrice organique obtenue notamment à partir d'une résine précurseur de matrice polymère telle qu'une résine époxyde, bismaléimide ou polyimide, ou une matrice en carbone ou une matrice en céramique. Dans le cas d'une matrice organique, la préforme fibreuse est imprégnée par une composition contenant la résine précurseur de matrice, avant conformation dans un outillage, ou après conformation, l'imprégnation étant dans ce dernier cas réalisée par exemple par infusion ou par un processus de type RTM ("Resin Transfer Moulding"). Dans le cas d'une matrice en carbone ou en céramique, la densification pourra être réalisée par infiltration chimique en phase gazeuse, ou CVI ("Chemical Vapor Infiltration") ou par imprégnation par une composition liquide contenant une résine précurseur de carbone ou de céramique et traitement thermique de pyrolyse ou céramisation du précurseur, ces procédés étant bien connus en soi.

L'usinage de la plate-forme à ses dimensions définitives est réalisé après injection/densification de la préforme fibreuse.

En liaison avec les figures 5 à 7, on décrira maintenant un exemple de tissage tridimensionnel de l'ébauche fibreuse 100, et plus particulièrement de la liaison entre les parties d'ébauches 102, 104 le long de la bande centrale 106.

Ces figures 5, 6 et 7 sont des vues très schématiques de plans de trame de l'ébauche fibreuse 100 de la figure 2, respectivement selon les plans V-V, VI-VI et VII-VII. Par plan de trame de l'ébauche fibreuse, on entend un plan perpendiculaire aux fils de chaîne contenant une colonne de fils de trame.

Le plan de trame V-V correspond à un plan pris à mi-chemin des deux extrémités longitudinales de l'ébauche fibreuse. Le plan de trame VI-VI est pris au niveau de la zone 110 correspondant à l'emplacement de la marche aval de la base de la plate-forme, tandis que le plan de trame VII-VII est pris en aval de la zone 110 (dans la direction F d'avancement du tissage).

L'ébauche fibreuse 100 comprend, entre ses faces externe 114a et interne 114b, 9 couches de fils de chaîne c₁ à c₉ et 9 couches de fils de trame t₁ à t₉ avec double croisement entre fils du groupe de fils de trame t₂ à t₅ et les fils du groupe de fils de trame t₆ à t₉ dans les zones de croisement 116a et 116b.

Des déliaisons 118a, 118b matérialisées par des traits sur les figures 5 à 7 sont ménagées entre couches de fils de chaîne voisines, en l'espèce entre les couches c₅ et c₆, ces déliaisons s'étendant dans des parties latérales de l'ébauche fibreuse 100 entre les bords latéraux opposés 100a, 100b de celle-ci et les zones de croisement 116a, 116b. Ces déliaisons se traduisent par l'absence de fils de trame les traversant pour lier entre eux des fils de chaîne situés de part et d'autre des déliaisons.

Les zones de croisement 116a, 116b délimitent entre elles la bande centrale de déliaison 106 le long de laquelle les deux parties d'ébauche sont liées. Ainsi, comme représenté sur la figure 6, les zones de croisement 116a, 116b sont plus espacées l'une de l'autre dans le plan de trame VI-VI de la figure 2 que dans le plan de trame V-V. Il en résulte un évasement vers l'aval de la bande de déliaison entre les deux parties d'ébauche. De même, sur la figure 7 correspondant au plan de trame VII-VII de la figure 2, il n'y a plus de déliaison entre les deux parties d'ébauche de sorte que celles-ci sont liées entre elles sur toute leur largeur pour ne former qu'un seul et même ensemble de couches de fils.

Comme indiqué précédemment, après tissage de l'ébauche fibreuse 100, les parties 120, 122 de l'ébauche adjacentes aux déliaisons 118a, 118b et à la face interne 114b sont déployées vers l'intérieur, pour former les préformes de jambes 112.

Bien entendu, les nombres de couches de fils de chaîne et de fils de trame dans les différentes parties de la préforme (base et jambes) pourront être différents de ceux de l'exemple illustré, dès lors qu'un tissage tridimensionnel est réalisé dans chacune de ces parties.

En outre, les nombres de fils dans les groupes de fils qui se croisent deux fois pourront aussi être différents de ceux de l'exemple illustré dès lors qu'il y a au moins un fil dans chaque groupe. En particulier, il n'est pas nécessaire que tous les fils de trame impliqués dans le tissage des jambes de la préforme soient impliqués dans un double croisement avec des fils de trame impliqués dans le tissage de la base.

De façon alternative, la liaison entre les parties d'ébauches 102, 104 de l'ébauche fibreuse le long de la bande de déliaison 106 pourrait être réalisée par ajout de fils supplémentaires (par piquage ou couture par exemple).

Enfin, dans le mode de réalisation précédemment décrit, chaîne et trame pourront bien entendu être inversées.

De manière plus générale, on notera également que la déliaison créée dans ce tissage pourra être obtenue d'autres façons connues en soi, notamment en déliant dans l'armure sans croisement des fils des deux ensembles de couches de fils.

Par exemple, la structure fibreuse pourra comprendre une partie correspondant à la bande centrale de déliaison précédemment décrite qui est formée par un tissage tridimensionnel avec une armure interlock liant les couches de fils sur toute l'épaisseur de la structure fibreuse, et deux parties correspondant aux jambes de la plateforme pour lesquelles deux couches de fils voisines (par exemple les couches c₅ et c₆ de la figure 5) ne viennent plus s'entrelacer pour lier plusieurs couches dans l'épaisseur de la structure mais sont tissées suivant un satin de surface pour créer deux parties de préforme déliées.

## Revendications

1. Procédé de fabrication d'une pièce de renfort (10) à section en π en matériau composite comprenant une première partie formant base (12) et une seconde partie formant raidisseur (14) ayant deux jambes (18) qui s'étendent depuis une face (12b) de la base et sur au moins une portion de la longueur de celle-ci, le procédé comprenant :
- la réalisation par tissage tridimensionnel d'un premier ensemble de plusieurs couches de fils liées entre elles pour former une première partie d'ébauche fibreuse (102) destinée à former une préforme de base,
- la réalisation par tissage tridimensionnel d'un second ensemble de plusieurs couches de fils liées entre elles pour former une seconde partie d'ébauche fibreuse (104) destinée à former une préforme de raidisseur, des fils du second ensemble de couches de fils étant liés par tissage aux fils du premier ensemble de couches de fils sur une bande centrale de déliaison (106) s'étendant longitudinalement entre les deux extrémités longitudinales de la première partie d'ébauche fibreuse ,
- la mise en forme des deux parties d'ébauche fibreuse pour obtenir une préforme fibreuse (100) en une seule pièce ayant une partie formant préforme de base et une partie formant préforme de raidisseur, et
- le dépôt d'une résine dans la préforme fibreuse par une matrice pour obtenir une pièce de renfort en matériau composite ayant un renfort fibreux constitué par la préforme et densifié par la matrice ; **caractérisé en ce que** la première partie formant base présente une marche (16) à au moins l'une de ses extrémités longitudinales et **en ce que** la bande centrale de déliaison s'évase vers les bords latéraux (102a) de celle-ci au niveau d'une zone (108, 110) correspondant à la marche de la base.

2. Procédé selon la revendication 1, **caractérisé en ce que** la liaison par tissage des fils du second ensemble de couches de fils aux fils du premier ensemble de couches de fils est obtenue par entrecroisement respectifs desdits fils sur la bande de déliaison.

3. Procédé selon l'une des revendications 1 et 2, **caractérisé en ce que**, lorsque la base de la pièce de renfort présente une marche à chacune de ses extrémités longitudinales, la bande de déliaison entre des fils du premier et du second ensemble de couches de fils s'évase vers les bords latéraux de la première partie d'ébauche fibreuse au niveau de chaque zone correspondant aux marches de la base.

4. Procédé selon la revendication 3, dans lequel, en amont de la zone correspondant à la marche amont de la base et en aval de la zone correspondant à la marche aval de la base, la bande de déliaison entre des fils du premier et du second ensemble de couches de fils s'étend transversalement sur toute la largeur de ladite première partie d'ébauche fibreuse.

5. Procédé selon l'une quelconque des revendications 1 à 4, **caractérisé en ce que** la mise en forme comprend la formation d'au moins une marche par pliage des deux parties d'ébauche fibreuse le long d'une même ligne de pliage (108b, 110a) sensiblement transversale.

6. Procédé selon l'une quelconque des revendications 1 à 5, **caractérisé en ce que** la mise en forme de la seconde partie d'ébauche fibreuse comprend le pliage des parties déliées (112) de la seconde partie d'ébauche fibreuse selon une direction sensiblement perpendiculaire à la première partie d'ébauche fibreuse de sorte à former deux préformes de jambes.

7. Pièce de renfort (10) à section en π en matériau composite comprenant une première partie formant base (12) et une seconde partie formant raidisseur (14) ayant deux jambes (18) qui s'étendent depuis une face (12b) de la base et sur au moins une portion de la longueur de celle-ci,
la première partie et la seconde partie sont liées entre elles par tissage le long d'une bande centrale de déliaison (106) qui s'étend longitudinalement entre les deux extrémités longitudinales de la première partie , **caractérisé en ce que** la première partie formant base présente une marche (16) à au moins l'une de ses extrémités longitudinales et **en ce que** la bande de déliaison s'évase vers les bords latéraux (102a) de celle-ci au niveau d'une zone (108, 110) correspondant à la marche de la base.

8. Pièce de renfort selon la revendication 7, **caractérisée en ce qu'**elle est en matériau composite à matrice organique.

9. Pièce de renfort selon l'une des revendications 7 et 8, **caractérisée en ce que** la première partie et la seconde partie sont liées entre elles par entrecroisement respectifs des fils qui les constituent sur la bande de déliaison.

10. Pièce de renfort selon l'une quelconque des revendications 7 à 9, **caractérisée en ce que**, en aval de la zone de la première partie correspondant à la marche de la base, la bande de déliaison entre la première partie et la seconde partie s'étend transversalement sur toute la largeur de ladite première partie.

11. Pièce de renfort selon l'une quelconque des revendications 7 à 10, **caractérisée en ce que** la première partie comprend une marche à chacune de ses extrémités longitudinales.

12. Pièce de renfort selon l'une quelconque des revendications 7 à 10, **caractérisée en ce qu'**elle constitue une plate-forme de soufflante de turbomachine.

13. Turbomachine équipée d'au moins une plate-forme de soufflante selon la revendication 12.

## Patentansprüche

1. Verfahren zur Herstellung eines Verstärkungsteils (10) mit π-förmigem Querschnitt aus Verbundwerkstoff, umfassend einen eine Basis bildenden ersten Teil (12) und einen eine Versteifung bildenden zweiten Teil (14) mit zwei Schenkeln (18), die sich von einer Seite (12b) der Basis aus sowie über wenigstens einen Abschnitt deren Länge erstrecken, wobei das Verfahren umfasst:
- das Ausbilden einer ersten Anordnung aus mehreren Fadenlagen durch dreidimensionales Weben, die untereinander verbunden sind, um einen ersten Faserrohlingteil (102) zu bilden, welcher dazu bestimmt ist, einen Basisvorformling zu bilden,
- das Ausbilden einer zweiten Anordnung aus mehreren Fadenlagen durch dreidimensionales Weben, die untereinander verbunden sind, um einen zweiten Faserrohlingteil (104) zu bilden, welcher dazu bestimmt ist, einen Versteifungsvorformling zu bilden, wobei Fäden der zweiten Anordnung aus Fadenlagen mit den Fäden der ersten Anordnung aus Fadenlagen über einen mittleren Losbindungsstreifen (106), der sich zwischen den beiden Längsenden des ersten Faserrohlingteils längs erstreckt, verwebt sind,
- das Informbringen der beiden Faserrohlingteile, um einen einstückigen Faservorformling (100) mit einem einen Basisvorformling bildenden Teil und einem einen Versteifungsvorformling bildenden Teil zu erhalten, und
- das Abscheiden eines Harzes in dem Faservorformling durch eine Matrix, um ein Verstärkungsteil aus Verbundwerkstoff mit einer durch den Vorformling gebildeten und durch die Matrix verdichteten Faserverstärkung zu erhalten, **dadurch gekennzeichnet, dass** der eine Basis bildende erste Teil eine Stufe (16) an wenigstens einem seiner Längsenden aufweist und dass der mittlere Losbindungsstreifen in Höhe eines der Stufe der Basis entsprechenden Bereichs (108, 110) zu dessen Seitenrändern (102a) hin weiter wird.

2. Verfahren nach Anspruch 1, **dadurch gekennzeichnet, dass** das Verweben der Fäden der zweiten Anordnung aus Fadenlagen mit den Fäden der ersten Anordnung aus Fadenlagen durch jeweiliges Verschlingen der Fäden über den Losbindungsstreifen erreicht wird.

3. Verfahren nach einem der Ansprüche 1 und 2, **dadurch gekennzeichnet, dass** wenn die Basis des Verstärkungsteils eine Stufe an jedem ihrer Längsenden aufweist, der Losbindungsstreifen zwischen Fäden der ersten und der zweiten Anordnung aus Fadenlagen in Höhe eines jeden den Stufen der Basis entsprechenden Bereichs zu den Seitenrändern des ersten Faserrohlingteils weiter wird.

4. Verfahren nach Anspruch 3, wobei vor dem der vorgelagerten Stufe der Basis entsprechenden Bereich und nach dem der nachgelagerten Stufe der Basis entsprechenden Bereich der Losbindungsstreifen zwischen Fäden der ersten und der zweiten Anordnung aus Fadenlagen quer über die gesamte Breite des ersten Faserrohlingteils verläuft.

5. Verfahren nach einem der Ansprüche 1 bis 4, **dadurch gekennzeichnet, dass** das Informbringen die Ausbildung wenigstens einer Stufe durch Falten der beiden Faserrohlingteile entlang einer gleichen, im Wesentlichen quer verlaufende Faltlinie (108b, 110a) umfasst.

6. Verfahren nach einem der Ansprüche 1 bis 5, **dadurch gekennzeichnet, dass** das Informbringen des zweiten Faserrohlingteils das Falten der losgebundenen Teile (112) des zweiten Faserrohlingteils in einer Richtung im Wesentlichen senkrecht zu dem ersten Faserrohlingteil umfasst, so dass zwei Schenkelvorformlinge gebildet werden.

7. Verstärkungsteil (10) mit π-förmigem Querschnitt aus Verbundwerkstoff, umfassend einen eine Basis bildenden ersten Teil (12) und einen eine Versteifung bildenden zweiten Teil (14) mit zwei Schenkeln (18), die sich von einer Seite (12b) der Basis aus sowie über wenigstens einen Abschnitt deren Länge erstrecken,
der erste Teil und der zweite Teil sind entlang eines mittleren Losbindungsstreifens (106), welcher sich zwischen den beiden Längsenden des ersten Teils längs erstreckt, miteinander verwebt, **dadurch gekennzeichnet, dass** der eine Basis bildende erste Teil eine Stufe (16) an wenigstens einem seiner Längsenden aufweist und dass der Losbindungsstreifen in Höhe eines der Stufe der Basis entsprechenden Bereichs (108, 110) zu dessen Seitenrändern (102a) hin weiter wird.

8. Verstärkungsteil nach Anspruch 7, **dadurch gekennzeichnet, dass** es aus Verbundwerkstoff mit organischer Matrix besteht.

9. Verstärkungsteil nach einem der Ansprüche 7 und 8, **dadurch gekennzeichnet, dass** der erste Teil und der zweite Teil durch jeweiliges Verschlingen der Fäden, die diese bilden, über den Losbindungsstreifen untereinander verbunden sind.

10. Verstärkungsteil nach einem der Ansprüche 7 bis 9, **dadurch gekennzeichnet, dass** nach dem Bereich des ersten Teils, der der Stufe der Basis entspricht, der Losbindungsstreifen zwischen dem ersten Teil und dem zweiten Teil quer über die gesamte Breite des ersten Teils verläuft.

11. Verstärkungsteil nach einem der Ansprüche 7 bis 10, **dadurch gekennzeichnet, dass** der erste Teil eine Stufe an jedem seiner Längsenden umfasst.

12. Verstärkungsteil nach einem der Ansprüche 7 bis 10, **dadurch gekennzeichnet, dass** es eine Plattform eines Gebläses einer Turbomaschine bildet.

13. Turbomaschine, die mit wenigstens einer Gebläseplattform nach Anspruch 12 ausgestattet ist.

## Claims

1. A method of fabricating a reinforcing part (10) of π-shaped section out of composite material, the part comprising a first portion forming a base (12), and a second portion forming a stiffener (14) having two legs (18) that extend from a face (12b) of the base over at least a fraction of the length thereof, the method comprising:
making a first set of a plurality of layers of yarns that are interlinked by three-dimensional weaving to form a first fiber blank portion (102) that is to form a base preform;
making a second set of a plurality of layers of yarns that are interlinked by three-dimensional weaving to form a second fiber blank portion (104) that is to form a stiffener preform, yarns of the second set of layers of yarns being interlinked by weaving with the yarns of the first set of layers of yarns in a central interlinked strip (106) extending longitudinally between the two longitudinal ends of the first fiber blank portion;
shaping the two fiber blank portions to obtain a single-piece fiber preform (100) having a portion forming a base preform and a portion forming a stiffener preform; and
depositing a resin in the fiber preform to form a matrix so as to obtain a composite material reinforcing part comprising fiber reinforcement constituted by the preform that is densified by the matrix,
**characterized in that** the first portion forming a base presents a step (16) at at least one of its longitudinal ends and **in that** the central interlinked strip flares towards the side edges (102a) thereof in a zone (108, 110) corresponding to the step of the base.

2. A method according to claim 1, **characterized in that** the interlinking of the yarns of the second set of layers of yarns and the yarns of the first set of layers of yarns by weaving is obtained by crossing said yarns respectively along the interlinked strip.

3. A method according to claim 1 or claim 2, **characterized in that** when the base of the reinforcing part presents a step at both of its longitudinal ends, the interlinked strip between the yarns of the first and second sets of layers of yarns flares toward the side edges of the first fiber blank portion in each of the zones corresponding to the steps of the base.

4. A method according to claim 3, wherein, upstream from the zone corresponding to the upstream step of the base and downstream from the zone corresponding to the downstream step of the base, the interlinked strip between the yarns of the first and second sets of layers of yarns extends transversely over the entire width of said first fiber blank portion.

5. A method according to any one of claims 1 to 4, **characterized in that** shaping comprises forming at least one step by folding the two fiber blank portions along a common, substantially-transverse fold line (108b, 110a).

6. A method according to any one of claims 1 to 5, **characterized in that** the shaping of the second fiber blank portion comprises folding the non-interlinked portions (112) of the second fiber blank portion in a direction that is substantially perpendicular to the first fiber blank portion so as to form two leg preforms.

7. A reinforcing part (10) of π-shaped section made of composite material, comprising a base-forming first portion (12), and a stiffener-forming second portion (14) having two legs (18) that extend from a face (12b) of the base over at least a fraction of the length thereof, the first and second portions are interlinked by weaving along a central interlinked strip (106) that extends longitudinally between the two longitudinal ends of the first portion and that flares towards the side edges (102a) thereof in a zone (108, 110) corresponding to the step of the base **characterized in that** the base-forming first portion presents a step (16) at at least one of its longitudinal ends and **in that** the central interlinked strip flares towards the side edges (102a) thereof in a zone (108, 110) corresponding to the step of the base.

8. A reinforcing part according to claim 7, **characterized in that** it is made of organic matrix composite material.

9. A reinforcing part according to claim 7 or claim 8, **characterized in that** the first and second portions are interlinked by respective crossings of the yarns that constitute them in the interlinked strip.

10. A reinforcing part according to any one of claims 7 to 9, **characterized in that** downstream from the zone of the first portion corresponding to the step of the base, the interlinked strip between the first and second portions extends transversely over the entire width of said first portion.

11. A reinforcing part according to any one of claims 7 to 10, **characterized in that** the first portion includes a step at each of its longitudinal ends.

12. A reinforcing part according to any one of claims 7 to 10, **characterized in that** it constitutes a fan platform of a turbine engine.

13. A turbine engine fitted with at least one fan platform according to claim 12.
